# EUROPÄISCHE PATENTSCHRIFT

(11) **EP 2 982 622 B1**
(45) Veröffentlichungstag und Bekanntmachung des Hinweises auf die Patenterteilung: **13.09.2017**
(21) Anmeldenummer: 15176500.5
(22) Anmeldetag: 13.07.2015
(51) Int. Cl.: B65G 47/71, B65G 47/64

(54) **VORRICHTUNG ZUM VERTEILEN EINES STROMS VON PRODUKTEN**
DEVICE FOR DISTRIBUTING A STREAM OF PRODUCTS
DISPOSITIF DE REPARTITION D'UN FLUX DE PRODUITS

(30) Priorität: 08.08.2014 DE 102014111330
(43) Veröffentlichungstag der Anmeldung: 10.02.2016
(73) Patentinhaber: Weber Maschinenbau GmbH Breidenbach, 35236 Breidenbach (DE)
(72) Erfinder: Lehmann, Stefan, 17034 Neubrandenburg (DE)
(74) Vertreter: Manitz Finsterwald Patentanwälte PartmbB

(56) Entgegenhaltungen:
- EP-A2- 0 274 229
- DE-A1-102008 007 768
- DE-U1- 29 710 322
- US-A- 6 152 284
- US-A1- 2006 175 179
- US-A1- 2007 119 756

## Beschreibung

Die vorliegende Erfindung betrifft eine Vorrichtung zum Verteilen eines Stroms von Produkten, insbesondere eines Stroms von aufgeschnittenen Lebensmittelprodukten, mit einem Eingangsförderer und einem Ausgangsförderer, welche dazu ausgebildet sind, die Produkte entlang einer Förderrichtung zu fördern und welche in Förderrichtung gesehen hintereinander angeordnet sind, wobei der Eingangsförderer zwei nebeneinanderliegende Förderspuren aufweist und der Ausgangsförderer drei in einem einheitlichen Spurabstand nebeneinanderliegende Förderspuren aufweist, und einer Verteileinrichtung, welche zwischen dem Eingangsförderer und dem Ausgangsförderer angeordnet ist und dazu ausgebildet ist, auf den zwei Förderspuren des Eingangsförderers geförderte Produkte auf die drei Förderspuren des Ausgangsförderers zu verteilen.

Mit modernen Hochleistungs-Slicern ist es möglich, von einem Produktriegel oder Produktlaib, zum Beispiel einem Wurstriegel oder Käselaib, mit hoher Schnittgeschwindigkeit einzelne Produktscheiben abzutrennen. Ebenso können abgetrennte Produktscheiben sowie aus mehreren zum Beispiel gestapelten oder geschindelten Produktscheiben bestehende Produktportionen mittels Fördereinrichtungen wie Band- oder Riemenförderern relativ schnell von dem Slicer abtransportiert und einer Vorrichtung zur weiteren Verarbeitung, beispielsweise einer Verpackungsmaschine, zugeführt werden. Hierbei ist es häufig wünschenswert, die Produkte eines ankommenden Produktstroms so zu verteilen, dass der abgehende Produktstrom eine andere Gruppierung - auch als Formatsatz bezeichnet - aufweist. Eine "zwei auf drei"-Verteilung, also eine Verteilung eines auf zwei Förderspuren ankommenden Produktstroms auf drei ausgehende Förderspuren, stellt hierbei eine in der Praxis häufig benötigte Verteilungsart dar.

Eine solche "zwei auf drei"-Verteilung kann beispielsweise unter Verwendung von Wippen und Doppelförderern oder mittels mehrerer querverschieblicher Verteilerförderer bewerkstelligt werden. Derartige Verteilvorrichtungen beanspruchen jedoch relativ viel Bauraum. Außerdem sind Herstellung und Betrieb solcher Verteilvorrichtungen relativ kostspielig, insbesondere aufgrund der Vielzahl an erforderlichen Antrieben einschließlich zugehöriger Steuerungen.

Die US 2006/0175179 A1 offenbart eine Vorrichtung zum Verteilen eines Stroms von Produkten nach dem Oberbegriff des Anspruchs 1, die mittels schwenkbarer Leitbleche geförderte Papierrollen auf verschiedene Förderspuren verteilt.

Es ist eine Aufgabe der Erfindung, eine Vorrichtung der eingangs genannten Art bereitzustellen, welche einen einfachen und platzsparenden Aufbau aufweist und einfach anzusteuern ist.

Die Lösung der Aufgabe erfolgt durch eine Vorrichtung mit den Merkmalen des Anspruchs 1.

Eine erfindungsgemäße Verteileinrichtung umfasst einen Spreizförderer mit wenigstens drei nebeneinanderliegenden Förderspuren, wobei eingangsseitig der Spurabstand benachbarter Förderspuren des Spreizförderers jeweils dem Spurabstand der zwei Förderspuren des Eingangsförderers entspricht und wobei ausgangsseitig der Spurabstand eines Paars benachbarter Förderspuren des Spreizförderers dem Spurabstand der Förderspuren des Ausgangsförderers entspricht und der Spurabstand des anderen Paars benachbarter Förderspuren des Spreizförderers gegenüber dem Spurabstand der Förderspuren des Ausgangsförderers verdoppelt ist.

Aufgrund der Spreizung ist es der Verteileinrichtung möglich, zwei gleichzeitig auf dem Eingangsförderer ankommende Produkte oder Produktportionen - nachfolgend einfach als "Produkte" bezeichnet - entgegenzunehmen und den beiden außenliegenden Förderspuren des Ausgangsförderers zuzuführen. Die Zuführung zweier nebeneinanderliegender Produkte an eine der außenliegenden Förderspuren und an die mittlere Förderspur des Ausgangsförderers ist ebenso möglich - indem nämlich die beiden Produkte auf den "ungespreizten" bzw. geringer gespreizten Förderspuren des Spreizförderers entgegengenommen werden. Somit kann durch geeignetes Querverschieben des Spreizförderers ein eingehendes Produktpaar an jede beliebige Kombination von Förderspuren des Ausgangsförderers übergeben werden. Ein Stoppen von einzelnen Produkten auf dem Spreizförderer ist hierbei nicht erforderlich, das heißt der Produktfluss kann auf dem Spreizförderer aufrechterhalten werden. Ein besonderer Vorteil der Erfindung besteht darin, dass die einzelnen Förderspuren des Spreizförderers zumindest während des Betriebs sowohl eingangsseitig als auch ausgangsseitig einen festen Abstand zueinander aufweisen können. Es werden dann also keine Komponenten des Spreizförderers aufeinander zu bewegt, so dass für einen Bediener kein Unfallrisiko durch Einklemmen besteht. Zudem sind bei festen Spurabständen nur wenige Antriebe einschließlich zugehöriger Steuerungen erforderlich.

Dadurch dass zwischen zwei benachbarten Förderspuren des Spreizförderers ein größerer Spreizfaktor besteht als zwischen den anderen benachbarten Förderspuren, kann bei Bedarf eine gleichzeitige Übergabe von Produkten an die beiden außenliegenden Förderspuren des Ausgangsförderers erfolgen, die mittlere Förderspur des Ausgangsförderers also gewissermaßen überbrückt werden.

Erfindungsgemäß ist vorgesehen, dass entweder der Spreizförderer als Ganzes quer zu der Förderrichtung verschiebbar ist oder dass ein eingangsseitiges Ende des Spreizförderers und ein ausgangsseitiges Ende des Spreizförderers voneinander unabhängig und jeweils unter Beibehaltung der Spurabstände der Förderspuren quer zu der Förderrichtung verschiebbar sind. Im erstgenannten Fall ist im Prinzip nur ein einziger Antrieb zum Betrieb der Verteileinrichtung erforderlich. Im letztgenannten Fall kann das eingangsseitige Ende des Spreizförderers bereits für die nächste Spurkombination passend positioniert werden, während das ausgangsseitige Ende des Spreizförderers noch für die aktuelle Spurkombination passend positioniert ist. Beispielsweise kann ein Produktpaar ausgangsseitig auf die linke und die mittlere Spur des Ausgangsförderers übergeben werden, während eingangsseitig bereits ein Produktpaar auf der mittleren Spur und der rechten Spur übernommen wird. Auf diese Weise kann der Durchsatz der Gesamtanlage gesteigert werden.

Ferner kann derjenige ausgangsseitige Spurabstand eines Paars benachbarter Förderspuren des Spreizförderers, der dem Spurabstand der Förderspuren des Ausgangsförderers entspricht, gegenüber dem eingangsseitigen Spurabstand dieser Förderspuren des Spreizförderers vergrößert sein, vorzugsweise um einen einstellbaren Vergrößerungsfaktor. Mit anderen Worten können bei Bedarf beispielsweise alle Spuren des Spreizförderers aufgespreizt sein, um so zum Beispiel die einlaufenden Produkte auf einen durch eine Verpackungsmaschine bzw. eine Tiefziehpackung oder einen Tray vorgegebenen Abstand zu bringen.

Der Spreizförderer dient dann nicht nur zum Verteilen der Produkte, sondern gleichzeitig auch zum Verändern des seitlichen Abstands zwischen den Produkten, d.h. zur Anpassung des seitlichen Abstands der Produkte an die ausgangsseitigen Verhältnisse, wie sie insbesondere durch die Verpackungsmaschine bzw. durch die Verpackungen vorgegeben sind.

Bei einer bevorzugten Ausgestaltung ist das Ausmaß an Spreizung zwischen allen benachbarten Förderspuren des Spreizförderers, insbesondere manuell oder motorisch, einstellbar. Durch die Einstellbarkeit der Spreizverhältnisse ist die Vorrichtung somit an unterschiedliche Anwendungssituationen anpassbar.

Vorzugsweise sind das eingangsseitige Ende des Spreizförderers und das ausgangsseitige Ende des Spreizförderers jeweils ausgehend von einer Mittelstellung um höchstens zwei Förderspuren quer zu der Förderrichtung verschiebbar. Eine Verschiebbarkeit um höchstens zwei Förderspuren ist im Allgemeinen ausreichend, um alle gewünschten Spurkombinationen zu realisieren. Eine Begrenzung des Verschiebewegs ist im Hinblick auf die Herstellungskosten und den beanspruchten Bauraum günstig.

Eine spezielle Ausführungsform der Erfindung sieht vor, dass die Förderspuren des Eingangsförderers und/oder die Förderspuren des Ausgangsförderers quer zur Förderrichtung unmittelbar aneinander angrenzen. Hierdurch kann der beanspruchte Bauraum besonders gering gehalten werden.

Der Spreizförderer kann auch wenigstens vier, insbesondere genau vier, nebeneinanderliegende Förderspuren aufweisen. Dies erweitert die Möglichkeiten der Zuordnung von eingangsseitigen und ausgangsseitigen Förderspuren des Spreizförderers, so dass die einzelnen Spurkombinationen schneller angefahren werden können.

Eine spezielle Ausführungsform der Erfindung sieht vor, dass der Spreizförderer genau vier nebeneinanderliegende Förderspuren aufweist, wobei ausgangsseitig der Spurabstand zwischen den beiden mittleren Förderspuren gegenüber dem Spurabstand der Förderspuren des Ausgangsförderers verdoppelt ist. Der Spreizförderer ist bei dieser Ausgestaltung mit zwei Paaren von ungespreizten Förderspuren versehen, welche jeweils für eine Übergabe eines Produktpaars an die linke und die mittlere Ausgangsspur einerseits sowie an die mittlere und die rechte Ausgangsspur andererseits genutzt werden können. Der Durchsatz der Anlage kann hierdurch weiter gesteigert werden.

Die Förderspuren des Ausgangsförderers können unabhängig voneinander antreibbar sein, um z. B. ein "Auffüllen" der verbleibenden Spur nach einer Übergabe von Produkten an die beiden anderen Spuren zu ermöglichen und so die Flexibilität der Verteileinrichtung zu erweitern.

Die Förderspuren des Eingangsförderers und/oder die Förderspuren des Spreizförderers sind hingegen vorzugsweise lediglich gemeinsam, insbesondere ausschließlich in Förderrichtung, antreibbar. Dies ermöglicht einen besonders einfachen und kostengünstigen Aufbau.

Es kann vorgesehen sein, dass der Spreizförderer direkt an den Eingangsförderer anschießend angeordnet ist und/oder der Ausgangsförderer direkt an den Spreizförderer anschließend angeordnet ist. Durch den Verzicht auf zusätzliche Verteilbänder wie zum Beispiel Wippen oder Querförderer können die Herstellungskosten und der Platzbedarf der Gesamtanlage besonders gering gehalten werden. Besonders bevorzugt ist es, dass die Verteileinrichtung ausschließlich durch den quer verschiebbaren Spreizförderer gebildet ist.

Gemäß einer bevorzugten Ausgestaltung der Erfindung sind der Eingangsförderer, der Ausgangsförderer und der Spreizförderer zum Fördern der Produkte innerhalb einer gemeinsamen horizontalen Förderebene ausgebildet und angeordnet. Mit anderen Worten werden Wippen, Rampen und mehrstöckige Förderabschnitte gezielt vermieden, um die Bauhöhe der Gesamtvorrichtung gering zu halten.

Vorzugsweise sind der Eingangsförderer, der Ausgangsförderer und der Spreizförderer jeweils als Band- oder Riemenförderer ausgebildet. Dies ermöglicht eine besonders einfache Konstruktion.

Die Förderspuren des Eingangsförderers, des Ausgangsförderers und des Spreizförderers können die gleiche Förderbreite aufweisen. Dies ermöglicht einen besonders einfachen Aufbau. Bevorzugt reicht die einheitliche Förderbreite gerade zum Aufnehmen eines Produkts oder einer Produktportion aus. Dadurch wird ein besonders kompakter Gesamtaufbau erzielt.

Die Erfindung betrifft auch ein Verfahren zum Verteilen eines Stroms von Produkten, insbesondere eines Stroms von aufgeschnittenen Lebensmittelprodukten, von einem die Produkte in einer Förderrichtung fördernden Eingangsförderer, welcher zwei nebeneinanderliegende Förderspuren aufweist, auf einen in Förderrichtung gesehen hinter dem Eingangsförderer angeordneten, die Produkte in Förderrichtung fördernden Ausgangsförderer, welcher drei nebeneinanderliegende Förderspuren aufweist, mittels einer Vorrichtung wie vorstehend beschrieben.

Erfindungsgemäß umfasst ein Verfahren zum Verteilen des Stroms von Produkten die Schritte:
Paralleles Fördern zweier eine Produktzeile bildender Produkte von den beiden Förderspuren des Eingangsförderers auf zwei Förderspuren eines wenigstens drei nebeneinanderliegende Förderspuren aufweisenden Spreizförderers, und
Fördern der zwei Produkte, mittels des Spreizförderers, auf zwei Förderspuren des Ausgangsförderers, wobei
aufeinanderfolgende Produktzeilen durch wenigstens abschnittsweises Verschieben des Spreizförderers unter Beibehaltung der Spurabstände der Förderspuren quer zu der Förderrichtung in Abhängigkeit von einem Verteilungskriterium entweder auf zwei benachbarte Förderspuren des Ausgangsförderers oder auf zwei durch eine weitere Förderspur getrennte Förderspuren des Ausgangsförderers gefördert werden.

Durch das abwechselnde Fördern von Produktpaaren des eingehenden Produktstroms auf zwei ungespreizten bzw. gering gespreizten Förderspuren und auf zwei gespreizten bzw. stark gespreizten Förderspuren können aufeinanderfolgende Paare von Produkten an unterschiedliche Kombinationen von ausgehenden Förderspuren übergeben werden. Hierbei ist jede denkbare Kombination realisierbar.

Gemäß einer bevorzugten Ausgestaltung der Erfindung werden aufeinanderfolgende Produktzeilen abwechselnd auf die in Förderrichtung gesehen linke und mittlere Förderspur, die mittlere und rechte Förderspur sowie die linke und die rechte Förderspur des Ausgangsförderers gefördert. Auf diese Weise werden im zeitlichen Mittel an alle Förderspuren des Ausgangsförderers gleich viele Produkte übergeben, so dass also langfristig auf den Förderspuren des Ausgangsförderers eine Gleichverteilung vorliegt. Dies ist hinsichtlich des Durchsatzes der Gesamtanlage besonders günstig.

Es kann vorgesehen sein, dass bereits vor dem Fördern der Produktzeile auf den Ausgangsförderer eine nachfolgende Produktzeile von dem Eingangsförderer auf den Spreizförderer gefördert wird. Der Durchsatz kann hierdurch weiter gesteigert werden.

Es ist bevorzugt, dass ein eingangsseitiges Ende des Spreizförderers und ein ausgangsseitiges Ende des Spreizförderers während des Förderns wenigstens einer Produktzeile voneinander unabhängig quer zu der Förderrichtung verschoben werden. Dies gewährleistet ein flexibles Entgegennehmen von Produkten auf unterschiedlichen Förderspuren des Spreizförderers unabhängig von der ausgangsseitigen Position dieser Förderspuren.

Weiterbildungen der Erfindung sind auch in den abhängigen Ansprüchen, der Beschreibung sowie der beigefügten Zeichnung angegeben.

Die Erfindung wird nachfolgend beispielhaft unter Bezugnahme auf die Zeichnung beschrieben.
- Fig. 1: ist eine vereinfachte Draufsicht auf eine erfindungsgemäße Vorrichtung zum Verteilen eines Stroms von Produkten in einem ersten Betriebszustand.
- Fig. 2: zeigt die Vorrichtung gemäß Fig.1 in einem zweiten Betriebszustand.
- Fig. 3: zeigt die Vorrichtung gemäß Fig. 1 in einem dritten Betriebszustand.
- Fig. 4: zeigt die Vorrichtung gemäß Fig. 1 in einem vierten Betriebszustand.
- Fig. 5: zeigt die Vorrichtung gemäß Fig. 1 in einem fünften Betriebszustand.
- Fig. 6: zeigt die Vorrichtung gemäß Fig. 1 in einem sechsten Betriebszustand.

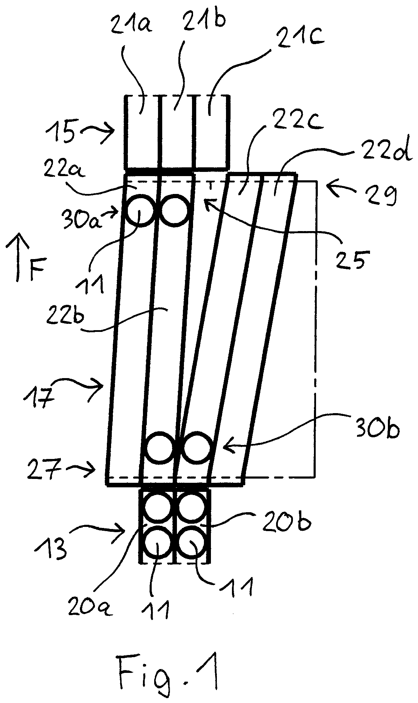

Die in Fig. 1 bis 6 gezeigte Vorrichtung dient zum Verteilen eines entlang einer Förderrichtung F zeilenweise geförderten Stroms von Lebensmittelprodukten 11, bei welchen es sich beispielsweise um Wurst- oder Käsescheiben oder um gestapelte oder geschindelte Portionen aus solchen Scheiben handeln kann. Die Produkte 11 werden zeilenweise auf einem Eingangsförderer 13 - zum Beispiel ausgehend von einem nicht dargestellten Slicer oder einem vorangehenden Produktförderer - entlang der Förderrichtung F bis zu einem Spreizförderer 17 gefördert. In der Förderrichtung F gesehen hinter dem Spreizförderer 17 ist ein Ausgangsförderer 15 angeordnet, auf welchem die Produkte 11 einer nachfolgenden, nicht dargestellten Produktverarbeitungsvorrichtung wie einer Verpackungsmaschine zugeführt werden.

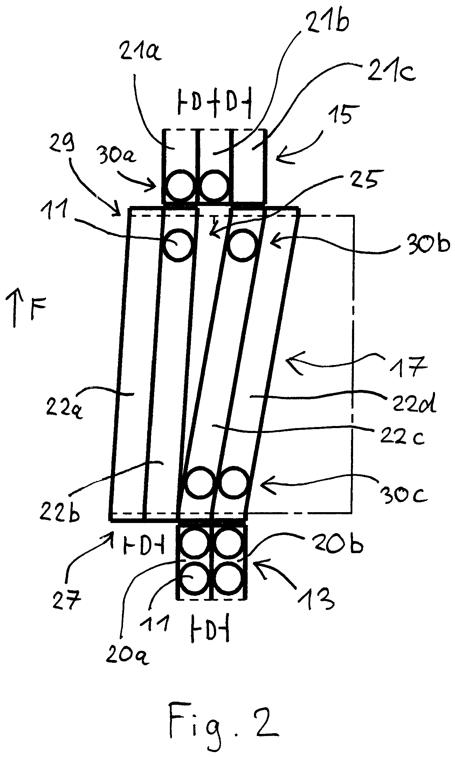

Wie dargestellt weist der Eingangsförderer 13 zwei nebeneinanderliegende Förderspuren 20a, 20b auf. Die Förderspuren 20a, 20b des Eingangsförderers 13 sind hier lediglich gemeinsam und ausschließlich in der Förderrichtung F antreibbar, wobei dies jedoch nicht zwingend ist. Der Ausgangsförderer 15 weist drei nebeneinanderliegende Förderspuren 21a, 21b, 21c auf, welche unabhängig voneinander antreibbar sind. Der von Förderflächenmitte zu Förderflächenmitte gemessene Spurabstand D (Fig. 2) zwischen nebeneinanderliegenden Förderspuren 21a, 21b, 21c des Ausgangsförderers 15 ist einheitlich und gleich dem Spurabstand D zwischen den beiden Förderspuren 20a, 20b des Eingangsförderers 13.

Der Spreizförderer 17 weist vier nebeneinanderliegende Förderspuren 22a, 22b, 22c, 22d auf, welche eingangsseitig ebenfalls den einheitlichen Spurabstand D aufweisen. Ausgangsseitig weisen jedoch lediglich jeweils die beiden außenliegenden Paare von Förderspuren 22a-d des Spreizförderers 17 den Spurabstand D auf. Zwischen den beiden mittleren Förderspuren 22b, 22c des Spreizförderers 17 befindet sich ausgangsseitig eine Spreizstelle 25, deren Breite gerade dem Spurabstand D entspricht. Der Spreizförderer 17 sorgt also für eine Verdopplung des Spurabstands zwischen den beiden mittleren Förderspuren 22b, 22c. Die Breite der Spreizstelle 25 kann einstellbar sein, um unterschiedliche Anwendungssituationen zu berücksichtigen.

Die Förderspuren 22a-d des Spreizförderers 17 sind vorzugsweise wie die Förderspuren 20a, 20b des Eingangsförderers 13 lediglich gemeinsam und ausschließlich in Förderrichtung F antreibbar. Falls anwendungsbedingt eine besonders große Flexibilität hinsichtlich der Verteilung erwünscht ist, könnte jedoch auch ein spurindividueller Antrieb für den Spreizförderer 17 vorgesehen sein. Mittels geeigneter, in den Figuren nicht dargestellter Antriebe sind das eingangsseitige Ende 27 des Spreizförderers 17 sowie das ausgangsseitige Ende 29 des Spreizförderers 17 voneinander unabhängig quer zu der Förderrichtung F unter jeweiliger Beibehaltung der Spurabstände der Förderspuren 22a-d verschiebbar. Eine geeignete elektronische Steuereinrichtung (nicht dargestellt) sorgt für einen Positionswechsel des eingangsseitigen Endes 27 und des ausgangsseitigen Endes 29 in Abhängigkeit von einem vorgegebenen Verteilungskriterium.

Der Eingangsförderer 13, der Ausgangsförderer 15 und der Spreizförderer 17 sind bei dem dargestellten Ausführungsbeispiel jeweils als Bandförderer ausgebildet, deren Förderbänder abgesehen von der Spreizstelle 25 im Wesentlichen direkt aneinander angrenzen. Die Bänder der Förderspuren 22a-d könnten jedoch auch voneinander beabstandet sein, solange die Spreizstelle 25 eine Förderspur 21a-c des Ausgangsförderers 15 überbrückt. Ebenso könnten auch die beiden äußeren linken Förderspuren 22a, 22b und/oder die beiden äußeren rechten Förderspuren 22c, 22d aufgespreizt sein, bei Bedarf mit einstellbarem Spreizverhältnis.

Nachfolgend wird der Betrieb der erfindungsgemäßen Vorrichtung unter Bezugnahme auf die Fig.1 bis 6, welche jeweils unterschiedliche aufeinanderfolgende Betriebszustände zeigen, erläutert. Zunächst werden zwei eine erste Produktzeile 30a bildende Produkte 11 von den beiden Förderspuren 20a, 20b des Eingangsförderers 13 auf die beiden äußeren linken Förderspuren 22a, 22b des Spreizförderers 17 gefördert. Das ausgangsseitige Ende 29 des Spreizförderers 17 wird derart positioniert, dass eine Übergabe der ersten Produktzeile 30a an die linke Förderspur 21a und die mittlere Förderspur 21b des Ausgangsförderers 15 möglich ist. Gleichzeitig oder anschließend wird das eingangsseitige Ende 27 des Spreizförderers 17 durch Querverschiebung verstellt und eine zweite Produktzeile 30b wird auf die beiden mittleren Förderspuren 22b, 22c des Spreizförderers 17 gefördert. Dieser Zustand ist in Fig. 1 dargestellt.

Fig. 2 zeigt einen Zustand, bei welchem sich die erste Produktzeile 30a bereits auf dem Ausgangsförderer 15 befindet und das eingangsseitige Ende 27 des Spreizförderers 17 derart positioniert ist, dass eine dritte Produktzeile 30c auf den beiden äußeren rechten Förderspuren 22c, 22d des Spreizförderers 17 übernommen werden kann. Das ausgangsseitige Ende 29 des Spreizförderers 17 wird derart positioniert, dass sich die Spreizstelle 25 im Bereich der mittleren Förderspur 21b des Ausgangsförderers 15 befindet.

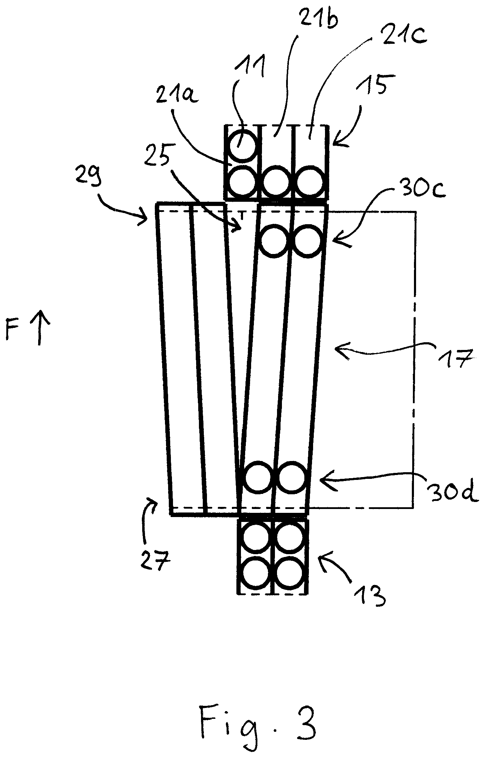

Die zweite Produktzeile 30b wird dann auf die beiden äußeren Förderspuren 21a, 21c des Ausgangsförderers 15 gefördert, wobei die mittlere Förderspur 21b des Ausgangsförderers 15 angehalten wird. Das ausgangsseitige Ende 29 des Spreizförderers 17 wird dann derart positioniert, dass eine Übergabe der dritten Produktzeile 30c an die mittlere Förderspur 21b und die rechte Förderspur 21c des Ausgangsförderers 15 möglich ist. Das eingangsseitige Ende 27 des Spreizförderers 17 wird derart positioniert, dass eine vierte Produktzeile 30d auf den beiden äußeren rechten Förderspuren 22b, 22c des Spreizförderers 17 vom Eingangsförderer 13 übernommen wird. Dieser Zustand ist in Fig. 3 dargestellt.

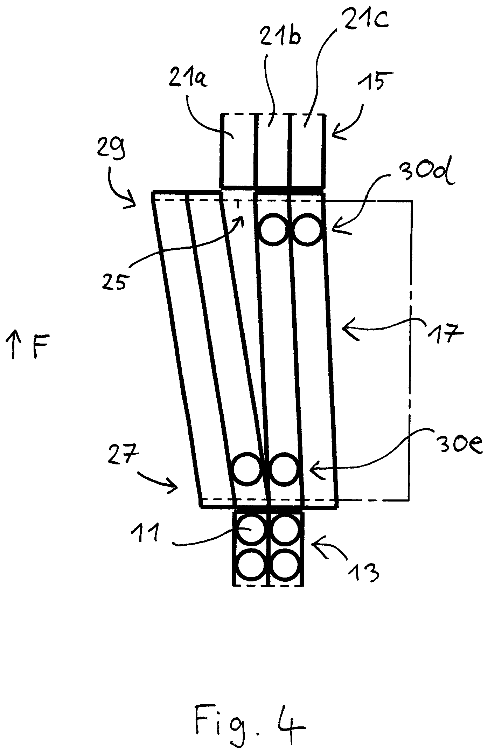

Als Nächstes werden die beiden vollständigen dreispurigen Produktzeilen auf dem Ausgangsförderer 15 abtransportiert und die vierte Produktzeile 30d wird für eine Übergabe an die mittlere Förderspur 21b und die rechte Förderspur 21c des Ausgangsförderers 15 positioniert, wie in Fig. 4 gezeigt ist. Eine fünfte Produktzeile 30e wird auf die beiden mittleren Förderspuren 22b, 22c des Spreizförderers 17 gefördert.

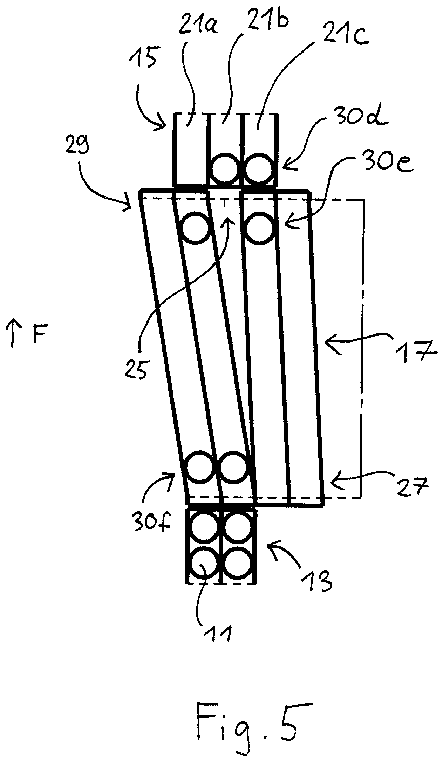

Das ausgangsseitige Ende 29 des Spreizförderers 17 wird dann wieder derart positioniert, dass die Spreizstelle 25 die mittlere Förderspur 21b des Ausgangsförderers 15 überbrückt. Das eingangsseitige Ende 27 des Spreizförderers 17 wird derart positioniert, dass eine sechste Produktzeile 30f auf den beiden äußeren linken Förderspuren 22a, 22b des Spreizförderers 17 übernommen werden kann. Dieser Zustand ist in Fig. 5 dargestellt.

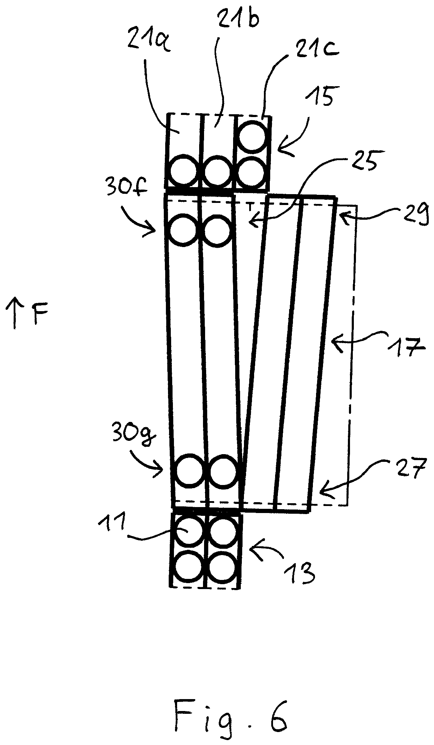

Fig. 6 zeigt einen Zustand, bei welchem die fünfte Produktzeile 30e übergeben ist und die sechste Produktzeile 30f für eine Übergabe an die linke und die mittlere Förderspur 21a, 21b des Ausgangsförderers 15 positioniert ist. Eine siebte Produktzeile 30g wird ebenfalls auf den beiden linken äußeren Förderspuren 22a, 22b des Spreizförderers 17 entgegengenommen. Der Zyklus kann nun von vorn beginnen.

Aus dem beschriebenen Ablauf geht hervor, dass bei einer gleichmäßigen Förderung zweispuriger Produktzeilen 30a-g auf dem Eingangsförderer 13 eine Verteilung auf die drei Förderspuren 21a-c des Ausgangsförderers 15 möglich ist, ohne hierbei im zeitlichen Mittel eine Förderspur 21a-c weniger zu berücksichtigen als die beiden anderen Förderspuren 21a-c. Für die Querverschiebung des Spreizförderers 17 müssen im Prinzip lediglich zwei Antriebe - einer für das eingangsseitige Ende 27 und ein weiterer für das ausgangsseitige Ende 29 - bereitgestellt werden. Da die Spurabstände des Spreizförderers 17 während des Betriebs der Vorrichtung sowohl eingangsseitig als auch ausgangsseitig stets gleich bleiben, besteht für einen Bediener der Vorrichtung keine Quetschgefahr. Da der Eingangsförderer 13 ohne Stoppen betrieben werden kann, ist zudem ein hoher Produktdurchsatz gewährleistet.

### Bezugszeichenliste

- 11: Produkt
- 13: Eingangsförderer
- 15: Ausgangsförderer
- 17: Spreizförderer
- 20a, 20b: Förderspur des Eingangsförderers
- 21a-c: Förderspur des Ausgangsförderers
- 22a-d: Förderspur des Spreizförderers
- 25: Spreizstelle
- 27: eingangsseitiges Ende
- 29: ausgangsseitiges Ende
- 30a-g: Produktzeile

- F: Förderrichtung

## Patentansprüche

1. Vorrichtung zum Verteilen eines Stroms von Produkten (11), insbesondere eines Stroms von aufgeschnittenen Lebensmittelprodukten, mit
einem Eingangsförderer (13) und einem Ausgangsförderer (15), welche dazu ausgebildet sind, die Produkte (11) entlang einer Förderrichtung (F) zu fördern und welche in Förderrichtung (F) gesehen hintereinander angeordnet sind, wobei der Eingangsförderer (13) zwei nebeneinanderliegende Förderspuren (20a, 20b) aufweist und der Ausgangsförderer (15) drei in einem einheitlichen Spurabstand (D) nebeneinanderliegende Förderspuren (21a-c) aufweist, und
einer Verteileinrichtung, welche zwischen dem Eingangsförderer (13) und dem Ausgangsförderer (15) angeordnet ist und dazu ausgebildet ist, auf den zwei Förderspuren (20a, 20b) des Eingangsförderers (13) geförderte Produkte (11) auf die drei Förderspuren (21a-c) des Ausgangsförderers (15) zu verteilen, wobei
die Verteileinrichtung einen Spreizförderer (17) mit wenigstens drei nebeneinanderliegenden Förderspuren (22a-d) umfasst, wobei eingangsseitig der Spurabstand benachbarter Förderspuren (22a-d) des Spreizförderers (17) jeweils dem Spurabstand der zwei Förderspuren (20a, 20b) des Eingangsförderers (13) entspricht und wobei ausgangsseitig der Spurabstand eines Paars benachbarter Förderspuren (22a-d) des Spreizförderers (17) dem Spurabstand (D) der Förderspuren (21a-c) des Ausgangsförderers (15) entspricht und der Spurabstand des anderen Paars benachbarter Förderspuren (22a-d) des Spreizförderers (17) gegenüber dem Spurabstand (D) der Förderspuren (21a-c) des Ausgangsförderers (15) verdoppelt ist,
dadur **chgekennzeichnet,** dass
der Spreizförderer (17) als Ganzes quer zu der Förderrichtung (F) verschiebbar ist oder dass
ein eingangsseitiges Ende (27) des Spreizförderers (17) und ein ausgangsseitiges Ende (29) des Spreizförderers (17) voneinander unabhängig und jeweils unter Beibehaltung der Spurabstände der Förderspuren (22a-d) quer zu der Förderrichtung (F) verschiebbar sind.

2. Vorrichtung nach Anspruch 1,
**dadurch gekennzeichnet, dass**
derjenige ausgangsseitige Spurabstand zumindest eines und bevorzugt jedes Paars benachbarter Förderspuren (22a-d) des Spreizförderers (17), der dem Spurabstand (D) der Förderspuren (21a-c) des Ausgangsförderers (15) entspricht, gegenüber dem eingangsseitigen Spurabstand dieser Förderspuren (22a-d) des Spreizförderers (17) vergrößert ist, vorzugsweise um einen einstellbaren Vergrößerungsfaktor.

3. Vorrichtung nach einem der Ansprüche 1 oder 2,
**dadurch gekennzeichnet, dass**
das eingangsseitige Ende (27) des Spreizförderers (17) und das ausgangsseitige Ende (29) des Spreizförderers (17) jeweils ausgehend von einer Mittelstellung um höchstens zwei Förderspuren quer zu der Förderrichtung (F) verschiebbar sind.

4. Vorrichtung nach einem der vorstehenden Ansprüche,
**dadurch gekennzeichnet, dass**
die Förderspuren (20a, 20b) des Eingangsförderers (13) und/oder die Förderspuren (21a-c) des Ausgangsförderers (15) quer zur Förderrichtung (F) unmittelbar aneinander angrenzen.

5. Vorrichtung nach einem der vorstehenden Ansprüche,
**dadurch gekennzeichnet, dass**
der Spreizförderer (17) wenigstens vier, insbesondere genau vier, nebeneinanderliegende Förderspuren (22a-d) aufweist, wobei insbesondere der Spreizförderer (17) genau vier nebeneinanderliegende Förderspuren (22a-d) aufweist, wobei ausgangsseitig der Spurabstand zwischen den beiden mittleren Förderspuren (22b, 22c) gegenüber dem Spurabstand (D) der Förderspuren (21a-c) des Ausgangsförderers (15) verdoppelt ist.

6. Vorrichtung nach einem der vorstehenden Ansprüche,
**dadurch gekennzeichnet, dass**
die Förderspuren (21a-c) des Ausgangsförderers (15) unabhängig voneinander antreibbar sind.

7. Vorrichtung nach einem der vorstehenden Ansprüche,
**dadurch gekennzeichnet, dass**
die Förderspuren (20a, 20b) des Eingangsförderers und/oder die Förderspuren (22a-d) des Spreizförderers (17) lediglich gemeinsam, insbesondere ausschließlich in Förderrichtung (F), antreibbar sind.

8. Vorrichtung nach einem der vorstehenden Ansprüche,
**dadurch gekennzeichnet, dass**
der Spreizförderer (17) direkt an den Eingangsförderer (13) anschließend angeordnet ist und/oder der Ausgangsförderer (15) direkt an den Spreizförderer (17) anschließend angeordnet ist.

9. Vorrichtung nach einem der vorstehenden Ansprüche,
**dadurch gekennzeichnet, dass**
der Eingangsförderer (13), der Ausgangsförderer (15) und der Spreizförderer (17) zum Fördern der Produkte (11) innerhalb einer gemeinsamen horizontalen Förderebene ausgebildet und angeordnet sind, und/oder dass der Eingangsförderer (13), der Ausgangsförderer (15) und der Spreizförderer (17) jeweils als Band- oder Riemenförderer ausgebildet sind, und/oder dass die Förderspuren (20a, 20b, 21a-c, 22a-d) des Eingangsförderers (13), des Ausgangsförderers (15) und des Spreizförderers (17) die gleiche Förderbreite aufweisen.

10. Verfahren zum Verteilen eines Stroms von Produkten (11), insbesondere eines Stroms von aufgeschnittenen Lebensmittelprodukten mittels einer Vorrichtung nach einem der vorstehenden Ansprüche, umfassend die Schritte:
- Paralleles Fördern zweier eine Produktzeile (30a-g) bildender Produkte (11) von den beiden Förderspuren (20a, 20b) des Eingangsförderers (13) auf zwei Förderspuren (22a-d) eines wenigstens drei nebeneinanderliegende Förderspuren aufweisenden Spreizförderers (17), und
- Fördern der zwei Produkte (11), mittels des Spreizförderers (17), auf zwei Förderspuren (21a-c) des Ausgangsförderers (15), wobei
- aufeinanderfolgende Produktzeilen (30a-g) durch wenigstens abschnittsweises Verschieben des Spreizförderers (17) unter Beibehaltung der Spurabstände der Förderspuren (22a-d) quer zu der Förderrichtung (F) in Abhängigkeit von einem Verteilungskriterium entweder auf zwei benachbarte Förderspuren (21a-c) des Ausgangsförderers (15) oder auf zwei durch eine weitere Förderspur getrennte Förderspuren (21a-c) des Ausgangsförderers (15) gefördert werden.

11. Verfahren nach Anspruch 10,
**dadurch gekennzeichnet, dass**
aufeinanderfolgende Produktzeilen (30a-g) abwechselnd auf die in Förderrichtung (F) gesehen linke und mittlere Förderspur (21a, 21b), die mittlere und rechte Förderspur (21b, 21c) sowie die linke und die rechte Förderspur (21a, 21c) des Ausgangsförderers (15) gefördert werden.

12. Verfahren nach Anspruch 10 oder 11,
**dadurch gekennzeichnet, dass**
bereits vor dem Fördern der Produktzeile (30a-g) auf den Ausgangsförderer (15) eine nachfolgende Produktzeile (30a-g) von dem Eingangsförderer (13) auf den Spreizförderer (17) gefördert wird.

13. Verfahren nach einem der Ansprüche 10 bis 12,
**dadurch gekennzeichnet, dass**
ein eingangsseitiges Ende (27) des Spreizförderers (17) und ein ausgangsseitiges Ende (29) des Spreizförderers (17) während des Förderns wenigstens einer Produktzeile (30a-g) voneinander unabhängig quer zu der Förderrichtung (F) verschoben werden.

## Claims

1. An apparatus for distributing a stream of products (11), in particular a stream of sliced food products, comprising
an incoming conveyor (13) and an outgoing conveyor (15) which are configured to convey the products (11) along a conveying direction (F) and which are arranged behind one another viewed in the conveying direction (F), wherein the incoming conveyor (13) has two conveying tracks (20a, 20b) disposed next to one another and the outgoing conveyor (15) has three conveying tracks (21a-c) disposed next to one another at a uniform track spacing (D); and
a distribution device which is arranged between the incoming conveyor (13) and the outgoing conveyor (15) and which is configured to distribute products (11) which are conveyed on the two conveying tracks (20a, 20b) of the incoming conveyor (13) onto the three conveying tracks (21a-c) of the outgoing conveyor (15), wherein
the distribution device comprises a spreading conveyor (17) having at least three conveying tracks (22a-d) disposed next to one another, with the track spacing of adjacent conveying tracks (22a-d) of the spreading conveyor (17) at the incoming side corresponding to the respective track spacing of the two conveying tracks (20a, 20b) of the incoming conveyor (13), and with the track spacing of a pair of adjacent conveying tracks (22a-d) of the spreading conveyor (17) at the outgoing side corresponding to the track spacing (D) of the conveying tracks (21a-c) of the outgoing conveyor (15) and the track spacing of the other pair of adjacent conveying tracks (22a-d) of the spreading conveyor (17) being doubled with respect to the track spacing (D) of the conveying tracks (21a-c) of the outgoing conveyor (15),
**characterized in that**
the spreading conveyor (17) as a whole is displaceable transversely to the conveying direction (F); or
**in that** an end (27) of the spreading conveyor (17) at the incoming side and an end (29) of the spreading conveyor (17) at the outgoing side are displaceable independently of one another transversely to the conveying direction (F) and while respectively maintaining the track spacings of the conveying tracks (22a-d).

2. An apparatus in accordance with claim 1,
**characterized in that**
that track spacing of at least one and preferably each pair of adjacent conveying tracks (22a-d) of the spreading conveyor (17) at the outgoing side which corresponds to the track spacing (D) of the conveying tracks (21a-c) of the outgoing conveyor (15) is increased, preferably by an adjustable factor of increase, with respect to the track spacing of these conveying tracks (22a-d) of the spreading conveyor (17) at the incoming side.

3. An apparatus in accordance with one of the claims 1 or 2,
**characterized in that**
the end (27) of the spreading conveyor (17) at the incoming side and the end (29) of the spreading conveyor (17) at the outgoing side are displaceable transversely to the conveying direction (F) by a maximum of two conveying tracks starting from a middle position in each case.

4. An apparatus in accordance with any one of the preceding claims,
**characterized in that**
the conveying tracks (20a, 20b) of the incoming conveyor (13) and/or the conveying tracks (21a-c) of the outgoing conveyor (15) are directly adjacent to one another transversely to the conveying direction (F).

5. An apparatus in accordance with any one of the preceding claims,
**characterized in that**
the spreading conveyor (17) has at least four conveying tracks (22a-d), in particular exactly four conveying tracks, disposed next to one another, with the spreading conveyor (17) in particular having exactly four conveying tracks (22a-d) disposed next to one another, and with the track spacing at the outgoing side between the two middle conveying tracks (22b, 22c) being doubled with respect to the track spacing (D) of the conveying tracks (21a-c) of the outgoing conveyor (15).

6. An apparatus in accordance with any one of the preceding claims,
**characterized in that**
the conveying tracks (21a-c) of the outgoing conveyor (15) can be driven independently of one another.

7. An apparatus in accordance with any one of the preceding claims,
**characterized in that**
the conveying tracks (20a, 20b) of the incoming conveyor and/or the conveying tracks (22a-d) of the spreading conveyor (17) can only be driven together, in particular only in the conveying direction (F).

8. An apparatus in accordance with any one of the preceding claims,
**characterized in that**
the spreading conveyor (17) is arranged directly adjoining the incoming conveyor (13); and/or **in that** the outgoing conveyor (15) is arranged directly adjoining the spreading conveyor (17).

9. An apparatus in accordance with any one of the preceding claims,
**characterized in that**
the incoming conveyor (13), the outgoing conveyor (15) and the spreading conveyor (17) are configured and arranged within a common horizontal conveying plane to convey the products (11); and/or **in that** the incoming conveyor (13), the outgoing conveyor (15) and the spreading conveyor (17) are each configured as a belt conveyor or strap conveyor; and/or **in that** the conveying tracks (20a, 20b, 21a-c, 22a-d) of the incoming conveyor (13), of the outgoing conveyor (15) and of the spreading conveyor (17) have the same conveying width.

10. A method of distributing a stream of products (11), in particular a stream of sliced food products, by means of an apparatus in accordance with any one of the preceding claims, comprising the steps:
- parallel conveying of two products (11) which form a product line (30a-g) from the two conveying tracks (20a, 20b) of the incoming conveyor (13) onto two conveying tracks (22a-d) of a spreading conveyor (17) which has at least three conveying tracks disposed next to one another; and
- conveying of the two products (11) by means of the spreading conveyor (17) onto two conveying tracks (21a-c) of the outgoing conveyor (15), wherein
- consecutive product lines (30a-g) are conveyed transversely to the conveying direction (F) in dependence on a distribution criterion either onto two adjacent conveying tracks (21a-c) of the outgoing conveyor (15) or onto two conveying tracks (21a-c) of the outgoing conveyor (15) which are separated by a further conveying track by an at least section-wise displacement of the spreading conveyor (17) while maintaining the track spacings of the conveying tracks (22a-d).

11. A method in accordance with claim 10,
**characterized in that**
consecutive product lines (30a-g) are alternately conveyed viewed in the conveying direction (F) onto the left and middle conveying tracks (21a, 21b), onto the middle and right conveying tracks (21b, 21c) as well as onto the left and right conveying tracks (21a, 21c) of the outgoing conveyor (15).

12. A method in accordance with claim 10 or claim 11,
**characterized in that**
a following product line (30a-g) is already conveyed from the incoming conveyor (13) onto the spreading conveyor (17) before the conveying of the product line (30a-g) onto the outgoing conveyor (15).

13. A method in accordance with any one of the claims 10 to 12,
**characterized in that**
an end (27) of the spreading conveyor (17) at the incoming side and an end (29) of the spreading conveyor (17) at the outgoing side are displaced independently of one another transversely to the conveying direction (F) during the conveying of at least one product line (30a-g).

## Revendications

1. Dispositif de répartition d'un flux de produits (11), en particulier d'un flux de produits alimentaires coupés en tranches, comportant un convoyeur d'entrée (13) et un convoyeur de sortie (15), qui sont conçus pour convoyer les produits (11) le long d'une direction de convoyage (F) et qui, vus en direction de convoyage (F), sont agencés l'un derrière l'autre, le convoyeur d'entrée (13) présentant deux traces de convoyage juxtaposées (20a, 20b) et le convoyeur de sortie (15) présentant trois traces de convoyage (21a-c) juxtaposées à une distance inter-traces uniforme (D),
et un moyen répartiteur qui est agencé entre le convoyeur d'entrée (13) et le convoyeur de sortie (15) et qui est conçu pour répartir des produits (11), convoyés sur les deux traces de convoyage (20a, 20b) du convoyeur d'entrée (13), vers les trois traces de convoyage (21a-c) du convoyeur de sortie (15),
dans lequel
le moyen répartiteur comprend un convoyeur écarteur (17) pourvu d'au moins trois traces de convoyage juxtaposées (22a-d), du côté entrée la distance inter-traces entre les traces de convoyage voisines (22a-d) du convoyeur écarteur (17) correspond à la distance inter-traces respective des deux traces de convoyage (20a, 20b) du convoyeur d'entrée (13), et du côté sortie, la distance inter-traces d'une paire de traces de convoyage voisines (22a-d) du convoyeur écarteur (17) correspond à la distance inter-traces (D) des traces de convoyage (21a-c) du convoyeur de sortie (15), et la distance inter-traces de l'autre paire de traces de convoyage voisines (22a-d) du convoyeur écarteur (17) est doublée par rapport à la distance inter-traces (D) des traces de convoyage (21a-c) du convoyeur de sortie (15),
**caractérisé en ce que**
le convoyeur écarteur (17) est déplaçable dans son ensemble transversalement à la direction de convoyage (F), ou **en ce que**
une extrémité (27) côté entrée du convoyeur écarteur (17) et une extrémité (29) côté sortie du convoyeur écarteur (17) sont déplaçables transversalement à la direction de convoyage (F), indépendamment l'une de l'autre et en gardant les distances inter-traces respectives des traces de convoyage (22a-d).

2. Dispositif selon la revendication 1,
**caractérisé en ce que**
cette distance inter-traces côté sortie d'au moins une paire et de préférence de chaque paire de traces de convoyage voisines (22a-d) du convoyeur écarteur (17), qui correspond à la distance inter-traces (D) des traces de convoyage (21a-c) du convoyeur de sortie (15) est agrandie par rapport à la distance inter-traces côté entrée de ces traces de convoyage (22a-d) du convoyeur écarteur (17), de préférence d'un facteur d'agrandissement réglable.

3. Dispositif selon l'une des revendications 1 ou 2,
**caractérisé en ce que**
l'extrémité (27) côté entrée du convoyeur écarteur (17) et l'extrémité (29) côté sortie du convoyeur écarteur (17) sont déplaçables chacune à partir d'une position médiane au maximum de deux traces de convoyage transversalement à la direction de convoyage (F).

4. Dispositif selon l'une des revendications précédentes,
**caractérisé en ce que**
les traces de convoyage (20a, 20b) du convoyeur d'entrée (13) et/ou les traces de convoyage (21a-c) du convoyeur de sortie (15) sont directement adjacentes l'une à l'autre transversalement à la direction de convoyage (F).

5. Dispositif selon l'une des revendications précédentes,
**caractérisé en ce que**
le convoyeur écarteur (17) comprend au moins quatre, en particulier précisément quatre traces de convoyage juxtaposées (22a-d), et en particulier le convoyeur écarteur (17) comprend précisément quatre traces de convoyage juxtaposées (22a-d), et du côté sortie la distance inter-traces entre les deux traces de convoyage (22b, 22c) médianes est le double de la distance inter-traces (D) des traces de convoyage (21a-c) du convoyeur de sortie (15).

6. Dispositif selon l'une des revendications précédentes,
**caractérisé en ce que**
les traces de convoyage (21a-c) du convoyeur de sortie (15) sont susceptibles d'être entraînées indépendamment les unes des autres.

7. Dispositif selon l'une des revendications précédentes,
**caractérisé en ce que**
les traces de convoyage (20a, 20b) du convoyeur d'entrée et/ou les traces de convoyage (22a-d) du convoyeur écarteur (17) sont susceptibles d'être entraînées uniquement conjointement, en particulier exclusivement en direction de convoyage (F).

8. Dispositif selon l'une des revendications précédentes,
**caractérisé en ce que**
le convoyeur écarteur (17) est agencé directement à la suite du convoyeur d'entrée (13) et/ou le convoyeur de sortie (15) est agencé directement à la suite du convoyeur écarteur (17).

9. Dispositif selon l'une des revendications précédentes,
**caractérisé en ce que**
le convoyeur d'entrée (13), le convoyeur de sortie (15) et le convoyeur écarteur (17) sont réalisés et agencés pour convoyer les produits (11) à l'intérieur d'un plan de convoyage horizontal commun, et/ou **en ce que** le convoyeur d'entrée (13), le convoyeur de sortie (15) et le convoyeur écarteur (17) sont réalisés chacun sous forme de convoyeur à bande ou à courroie, et/ou **en ce que** les traces de convoyage (20a, 20b, 21a-c, 22a-d) du convoyeur d'entrée (13), du convoyeur de sortie (15) et du convoyeur écarteur (17) présentent la même largeur de convoyage.

10. Procédé de répartition d'un flux de produits (11), en particulier d'un flux de produits alimentaires coupés en tranches, au moyen d'un dispositif selon l'une des revendications précédentes, comprenant les étapes suivantes consistant à :
- convoyer parallèlement deux produits (11) formant une ligne de produits (30a-g) depuis les deux traces de convoyage (20a, 20b) du convoyeur d'entrée (13) vers deux traces de convoyage (22a-d) d'un convoyeur écarteur (17) présentant au moins trois traces de convoyage juxtaposées et
- convoyer les deux produits (11) au moyen du convoyeur écarteur (17) vers deux traces de convoyage (21a-c) du convoyeur de sortie (15), et
- convoyer des lignes de produits successives (30a-g) par déplacement au moins partiel du convoyeur écarteur (17) en gardant les distances inter-traces des traces de convoyage (22a-d) transversalement à la direction de convoyage (F) en fonction d'un critère de répartition soit vers deux traces de convoyage voisines (21a-c) du convoyeur de sortie (15), soit vers deux traces de convoyage (21a-c) du convoyeur de sortie (15) séparées par une autre trace de convoyage.

11. Procédé selon la revendication 10,
**caractérisé en ce que**
des lignes de produits successives (30a-g) sont convoyées en alternance vers les traces de convoyage (21 a, 21 b) médiane et de gauche, vues en direction de convoyage (F), vers les traces de convoyage (21b, 21c) médiane et de droite, ainsi que vers les traces de convoyage (21a, 21c) de gauche et de droite du convoyeur de sortie (15).

12. Procédé selon les revendications 10 ou 11,
**caractérisé en ce que**
déjà avant de convoyer la ligne de produits (30a-g) vers le convoyeur de sortie (15), une ligne de produits (30a-g) successive est convoyée depuis le convoyeur d'entrée (13) vers le convoyeur écarteur (17).

13. Procédé selon l'une des revendications 10 à 12,
**caractérisé en ce que**
une extrémité (27) côté entrée du convoyeur écarteur (17) et une extrémité (29) côté sortie du convoyeur écarteur (17) sont déplacées transversalement à la direction de convoyage (F) indépendamment l'une de l'autre pendant le convoyage d'au moins une ligne de produits (30a-g).
